(19) Europäisches Patentamt
European Patent Office
Office européen des brevets

(11) **EP 4 160 792 B1**

(12) **EUROPEAN PATENT SPECIFICATION**

(45) Date of publication and mention
of the grant of the patent:
**11.10.2023  Bulletin 2023/41**

(51) International Patent Classification (IPC):
*H01M 50/209* (2021.01)   *H01M 50/242* (2021.01)
*H01M 50/289* (2021.01)

(21) Application number: **22198434.7**

(22) Date of filing: **28.09.2022**

(52) Cooperative Patent Classification (CPC):
**H01M 50/209; H01M 50/242; H01M 50/289;**
Y02E 60/10; Y02P 70/50

(54) **BATTERY**

BATTERIE

BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.09.2021   CN 202122406131 U**

(43) Date of publication of application:
**05.04.2023   Bulletin 2023/14**

(73) Proprietor: **Xiamen Hithium Energy Storage
Technology Co., Ltd.**
**Xiamen, Fujian 361100 (CN)**

(72) Inventors:
• **GUO, Yongkai**
**Xiamen, 361100 (CN)**
• **XU, Weidong**
**Xiamen, 361100 (CN)**
• **LAN, Jinhua**
**Xiamen, 361100 (CN)**
• **YI, Ziqi**
**Xiamen, 361100 (CN)**
• **WU, Zuyu**
**Xiamen, 361100 (CN)**

(74) Representative: **RGTH
Patentanwälte PartGmbB
Neuer Wall 10
20354 Hamburg (DE)**

(56) References cited:
**EP-A1- 3 503 250          CN-A- 107 394 063
JP-A- 2019 067 653      US-A1- 2013 209 859
US-A1- 2018 269 523**

EP 4 160 792 B1

## Description

## Technical Field

The present application relates to the field of battery techniques, in particular to a battery.

## Background Art

Electric energy has become an indispensable energy in daily life in the current society, and more and more attention has been paid to generation and storage of the electric energy. Especially for the storage of the electric energy, the electric energy that cannot be fully consumed is stored by a battery, and thus continuous supply of the electric energy may be achieved when a failure occurs to an electric power system.

In batteries of the related art, a jelly-roll is usually installed in an accommodating cavity of a housing. However, during installing the jelly-roll in the accommodating cavity of the housing and during moving the battery, the jelly-roll may collide with the housing, resulting in damage to the jelly-roll structure, thereby affecting the stability of the electrical performance of the battery, where the battery may become unusable in severe cases.

CN 107 394 063 A discloses a secondary cell comprising a housing, a naked battery core, wherein the naked battery core being wrapped by a dielectric film and being housed in the housing, a top cover sealing an open top of the housing and touching an upper part of the naked battery core, and a battery core supporting plate arranged between the dielectric film wrapping a bottom of the naked battery core and a bottom of the housing.

The electric storage element disclosed in US 2013/209859 A1 comprises a case, which accommodates an electrode body, and is sealed by a lid plate on a top opening of the case. Two side spacers and a bottom spacer care assembled to the electrode body and as the electrode body is insulated by an insulating member, the side spacers and bottom spacer are fixed by the insulating member when the latter wraps around the electrode body. The side spacers and bottom spacer are of importance to the electric storage element as to reduce a space between the case and the electrode body.

US 2018/269523 A1 depicts an energy storage device which comprises a container accommodating an electrode body and a cover plate structure covering a top opening of the container. Two side spacers are fixed to two curved sides of the electrode body by adhesive tapes, and an insulating sheet is provided in the container covering the electrode body and the side spacers.

EP 3 503 250 A1 discloses a rechargeable battery comprising a casing, an electrode assembly accommodated by the casing, a cap assembly sealing an opening of the casing, and a spacer disposed between a bottom of the electrode assembly and a bottom of the casing. Besides, insulating members are provided between the cap assembly and a top of the electrode assembly.

The non-aqueous electrolyte secondary battery described in JP 2019 067653 A comprises a battery case, a wound electrode body, an insulating film covering the wound electrode body to insulate the wound electrode body when accommodated inside the battery case, and a rectangular cover sealing an opening of the battery case. The insulating film has a changing thickness corresponding to the shape and configuration of the wound electrode body.

## Summary

Embodiments of the present application disclose a battery in which insulation and anti-collision protection for the jelly-roll are achieved, and service life of the battery is improved.

In order to achieve the above object, the present application discloses a battery, comprising:

a housing having an accommodating cavity having an opening;
a core assembly provided in the accommodating cavity and including a jelly-roll and an insulating sheet covering the jelly-roll, where the jelly-roll comprises a body portion, and the body portion comprises a top end face and a bottom end face located at two ends of the body portion respectively, and a peripheral face connected to the top end face and the bottom end face, and the insulating sheet covers the peripheral face and/or the bottom end face;
a separator provided in the housing and configured to separates the bottom end face of the jelly-roll from a bottom face of the housing; and
a top cover assembly connected to the housing in a sealed manner and closes the opening of the housing, where the top cover assembly is spaced apart from the insulating sheet.

According to the present invention, the insulating sheet comprises a circumferentially covering area which covers the peripheral face of the body portion, and the bottom covering area which covers the bottom end face of the body portion, and the separator is provided on a side face of the bottom covering area away from the body portion.

According to the present invention, the insulating sheet is provided thereon with a liquid-guiding flow channel which partially guides electrolyte located between the jelly-roll and the insulating sheet to a location between the insulating sheet and the housing.

According to the present invention, an air flow channel is formed between the insulating sheet and the top cover assembly.

According to the present invention, the top cover assembly comprises a top cover plate for closing the opening of the housing, and a lower plastic member connected to a lower surface of the top cover plate facing the jelly-roll; the insulating sheet comprises a circumferentially covering area which covers the peripheral surface of the body portion; a plurality of connection bosses are provided at a peripheral edge of the lower plastic member and extending towards the jelly-roll, wherein the circumferentially covering area is connected to an outer peripheral surface of the plurality of connection bosses; and wherein a top surface of the insulating sheet facing the top cover plate is spaced apart from the lower surface of the top cover plate facing the jelly-roll; and the battery further comprises a glue tape, wherein the glue tape is provided on the circumferentially covering area or between the circumferentially covering area and the bottom covering area, so that a cavity for covering the jelly-roll is formed and enclosed by the circumferentially covering area and the bottom covering area, and the glue tape is located outside the cavity; and wherein the liquid-guiding flow channel is a gap where a junction of each covering area is formed.

Compared with the prior art, the present application brings about the following beneficial effects:

By the battery provided by embodiments of the present application, the battery comprises a housing having an accommodating cavity and a core assembly provided in the accommodating cavity, where the core assembly further comprises a jelly-roll and an insulating sheet covering the jelly-roll, and the battery implements insulating and protecting for the jelly-roll through covering by the insulating sheet; also, a separator is provided between a bottom end face of the jelly-roll and a bottom face of the housing, where corners of the bottom face of the housing would be designed as rounded corners during processing the housing, and thus, when the jelly-roll is directly placed in the accommodating cavity of the housing, by provision of a separator, the bottom end face of the jelly-roll may be provided to be spaced apart from the bottom face of the housing, and the bottom end face of the jelly-roll may be spaced apart from the rounded corners of the bottom face of the housing, and thus the jelly-roll may be prevented effectively from colliding with the rounded corners of the housing, and active substances inside the jelly-roll are avoided from falling off that results in a short circuit of the jelly-roll, thereby effectively ensuring normal use of the battery.

Further, by the battery, an opening of the accommodating cavity of the housing is closed by a top cover assembly, and the top cover assembly is provided to be spaced apart from the insulating sheet to prevent the insulating sheet from interfering with the top cover assembly during welding the top cover assembly and the housing which may result in curling of the insulating sheet, which in turn leads to deformation of the insulating sheet. Moreover, when the insulating sheet is provided to be spaced apart from the top cover assembly, space between the insulating sheet and the jelly-roll may be communicated with space between the housing and the insulating sheet, so that gas inside the housing may circulate and flow inside the housing, then heat dissipation function on the jelly-roll may be improved, air pressure difference between the interior and exterior of the housing may be reduced, and the safety of the battery is improved. In addition, during the use of the battery, the jelly-roll would generate gas, and since the space between the insulating sheet and the jelly-roll may be communicated with space between the housing and the insulating sheet, gas generated by the jelly-roll may flow to between the insulating sheet and the housing, then a punching force of the gas generated by the jelly-roll on the insulating sheet may be reduced, and the safety performance of the battery is further improved.

**Brief Description of Drawings**

Drawings required for use in the description of embodiments will be introduced briefly below in order to explain the technical solutions of the embodiments of the present application more clearly. It will be apparent that the drawings described below are merely illustrative of some embodiments of the present application, and those skilled in the art can also obtain, from these drawings, other drawings without inventive efforts.

Figure 1 is a three dimensionally structural schematic view of a battery provided by the present embodiment;
Figure 2 is a sectional view at direction A of Figure 1;
Figure 3 is an enlarged view of portion B in Figure 2;
Figure 4 is a sectional view at direction A of Figure 1 in another structure;
Figure 5 is an enlarged view of portion C in Figure 4;
Figure 6 is an exploding structural schematic view of a battery provided by the present embodiment;
Figure 7 is a structural schematic view of a jelly-roll provided by the present embodiment;
Figure 8 is a three dimensionally structural schematic view of an insulating sheet and a separator provided by the present embodiment;
Figure 9a is an unfolding structural schematic view of a first insulating sheet structure provided by the present embodiment;
Figure 9b is an unfolding structural schematic view of a second insulating sheet structure provided by the present embodiment;
Figure 9c is an unfolding structural schematic view of a third insulating sheet structure provided by the present embodiment;
Figure 9d is an unfolding structural schematic view of a fourth insulating sheet structure provided by the present embodiment;
Figure 9e is an unfolding structural schematic view of a fifth insulating sheet structure provided by the present embodiment;
Figure 9f is an unfolding structural schematic view of a sixth insulating sheet structure provided by the present embodiment;
Figure 10 is a three dimensionally structural schematic view of an insulating sheet provided by the present embodiment;
Figure 11 is a three dimensionally structural schematic view in which the insulating sheet and the top cover assembly embodiment provided by the present embodiment are connected;
Figure 12 is an enlarged view of portion C in Figure 11;
Figure 13 is an exploding three dimensionally structural schematic view of an insulating sheet and a top cover assembly provided by the present embodiment; and
Figure 14 is an enlarged view of portion D in Figure 13.

Reference signs:

10 housing; 11 bottom face; 12 rounded corner; 20 core assembly; 21 jelly-roll; 211 body portion; 212 top end face; 213 bottom end face; 214 first side face; 215 second side face; 22 insulating sheet; 221 circumferentially covering area ; 2211 first covering area; 2212 second covering area; 221a first flank; 221b second flank; 221c third flank; 221d fourth flank; 221e first bending area; 221f second bending area; 221g third bending area; 221h fourth bending area; 2213 second hot melting connection position; 222 bottom covering area; 2221 fourth hot melting connection position; 2222 second positioning hole; 223, liquid-guiding flow channel; 224 top face; 30 glue tape; 40 top cover assembly; 41 top cover plate; 42 lower plastic member; 421 connection boss; 42a first hot melting connection position; 50 separator; 51 first surface; 511 third hot melting connection position; 512 first positioning hole; 52 corner; 100 battery.

**Detailed Description of the Embodiments**

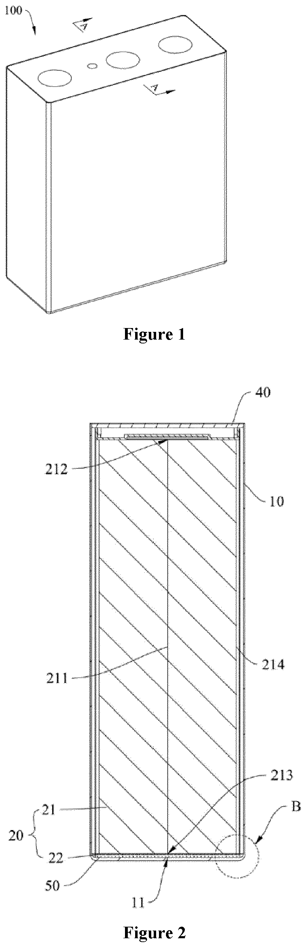

The technical solutions of the present application will be described clearly and completely with reference to the drawings in embodiments of the present application.
In the present application, orientation or positional relationship indicated by terms "on", "below", "left", "right", "front", "rear", "top", "bottom", "inside", "outside", "center", "vertical", "horizontal", "transversal", "longitudinal", etc. is based on the orientation or positional relationship shown in the drawings. These terms are primarily used to better describe the present application and its embodiments, and are not intended to define the indicated device, element or component must have a particular orientation, or must be configured and operated in a particular orientation.
Moreover, in addition to orientation or positional relationship, some of the above terms may be used to indicate other meanings, for example, the term "on" may also be used to indicate a certain dependency or connection relationship in some cases. For an ordinary skilled in the art, the specific meaning of the above terms in the present application may be understood according to specific circumstances.
Furthermore, terms "install", "provide", "arrange", "connect", and "couple" should be interpreted broadly. For example, the connection may be a fixed connection, a detachable connection, or a unitary structure; it may be a mechanical connection, or an electrical connection; it may be a direct connection, or an indirectly connection made through an intermediate media, or it may be an inside communication between two devices, elements, or components. For an ordinary skilled in the art, the specific meaning of the above terms in the present application may be understood according to specific circumstances.
In addition, terms "first" and "second" etc. are mainly used to distinguish different devices, elements or components (the specific types and structures may be the same or different), and are not intended to indicate or imply indicated relative importance and number of the indicated devices, elements or components. Unless stated otherwise, the wording "plurality" means two or more than two.
Technical solutions of the present application will be further described below in connection with embodiments and the drawings.
Please refer to Figures 1 to 3. An embodiment of the present application discloses a battery 100. The battery 100 comprises a housing 10 having an accommodating cavity and a core assembly 20 provided in the accommodating cavity and including a jelly-roll 21 and an insulating sheet 22, where the insulating sheet 22 is covering the jelly-roll 21 to implement insulating and protecting for the jelly-roll 21, and the jelly-roll 21 comprises a body portion 211, and the body portion 211 comprises a top end face 212 and a bottom end face 213 located respectively at two ends of the body portion 211, and a peripheral face connected to the top end face 212 and the bottom end face 213, the insulating sheet 22 may be covered on the peripheral face of the body portion 211 of the jelly-roll 21, or may be covered on the bottom end face 213 of the body portion 211 of the jelly-roll 21, or may be covered on the peripheral face and the bottom end face 213 of the body portion 211 of the jelly-roll 21 at the same time, so as to improve the insulating and protecting effect of the insulating sheet 22.
Corners of the bottom face 11 of the housing 10 would be designed as rounded corners 12 during processing the housing 10, and thus, when the jelly-roll 21 is directly placed in the accommodating cavity of the housing 10, if the jelly-roll 21 is in direct contact with the housing 10, a contact between the jelly-roll 21 and the rounded corner 12 is a line contact at the position of the rounded corner 12 of the housing 10, in which case a portion where the jelly-roll 21 is in contact with the rounded corner 12 of the housing 10 is subjected to a large pressure, then the active materials inside the jelly-roll 21 would fall off, and there is a short circuit between a positive electrode and a negative electrode inside the jelly-roll 21, and thus the jelly-roll 21 cannot implement normal functions of charging and discharging, resulting in electrical failure of the battery and even danger.

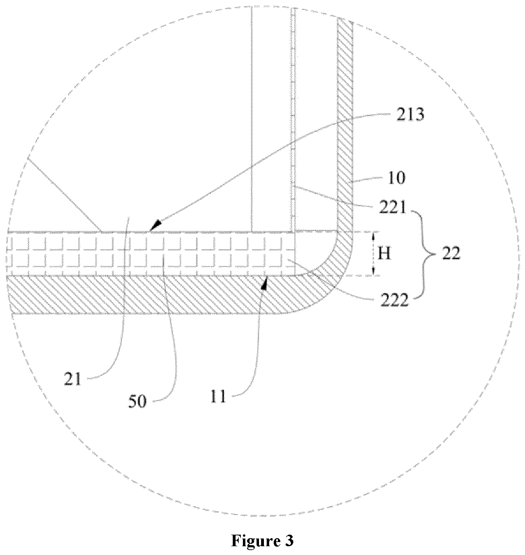

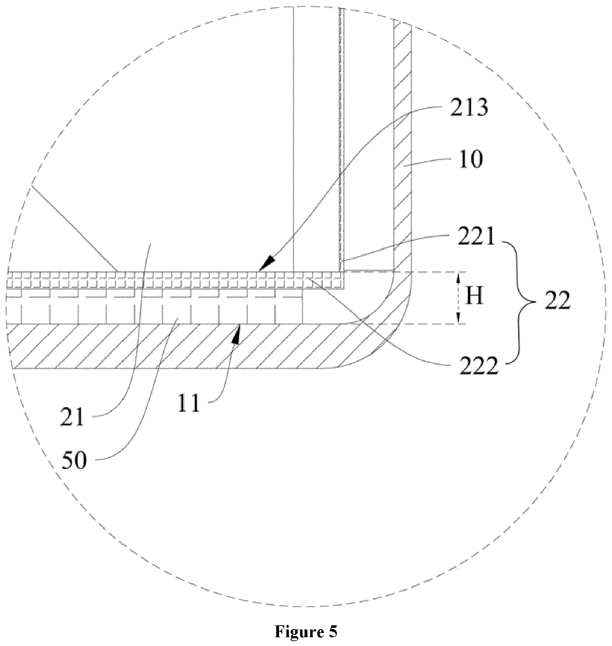

Owning to the above reasons, as shown in Figures 3 to 5, a separator 50 is provided between a bottom end face 213 of the jelly-roll 21 and a bottom face 11 of the housing 10 for a spaced apart provision. By a spaced apart provision between the bottom end face 213 of the jelly-roll 21 and the bottom face 11 of the housing 10, the bottom end face 213 of the jelly-roll 21 may be spaced apart from the rounded corner 12 of the bottom face 11 of the housing 10, then the jelly-roll 21 may be prevented effectively from colliding with the rounded corners 12 of the housing 10, and active substances inside the jelly-roll 21 may be avoided from falling off, resulting in a short circuit of the jelly-roll 21.

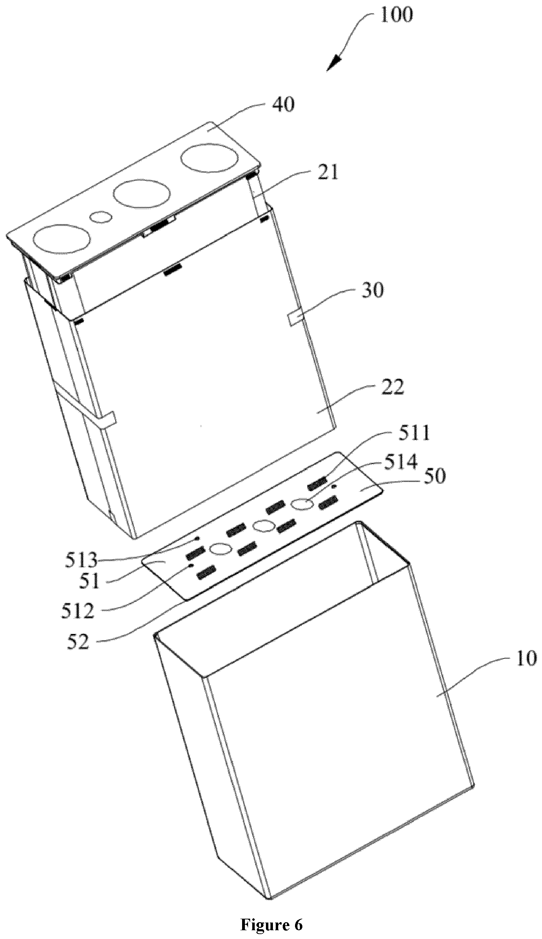

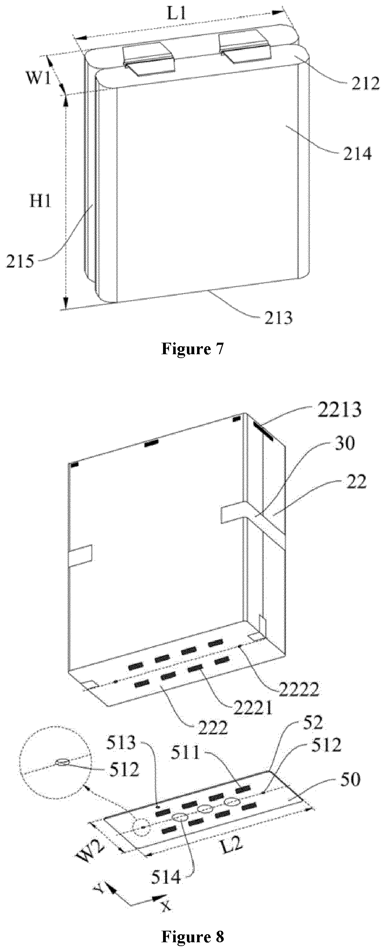

In connection with what is shown in Figures 6 and 7, it may be understood that the body portion 211 of the above jelly-roll 21 may be approximately a square block, with a size L1 in length direction thereof, a size W1 in width direction thereof, and a size H1 in height direction thereof, where the jelly-roll 21 as a whole may approximately form a cuboid structure with a length×width×height of L1×W1×H1. To design the jelly-roll 21 into a simple, regular three-dimensional shape helps subsequent packaging and protection, etc., for the jelly-roll 21, and simplifies the design of the overall structure of the battery 100.

Specifically, the peripheral face of the jelly-roll 21 comprises first side faces 214 on both side faces along its own width direction, and second side faces 215 on both side faces along its own length direction, and bottom face 11. During installing the jelly-roll 21, the insulating sheet 22 covers two first side faces 214, two second side faces 215, and a bottom end face 213 of the bottom face 11, thereby insulating and protecting the jelly-roll 21.

Please refer to Figures 2, 3, 6 and 7 again. In an optional implementation, the insulating sheet 22 comprises a circumferentially covering area 221,the peripherally covering area covers the peripheral face of the body portion 211 of the jelly-roll 21, and the separator 50 is integrally formed in the insulating sheet 22 and serves as a bottom covering area which covers the bottom end face 213 of the body portion 211 of the jelly-roll 21. When the separator 50 and the insulating sheet 22 are integrally formed, connection strength between the insulating sheet 22 and the separator 50 may be improved. Moreover, when the separator 50 and the insulating sheet 22 are integrally formed, distance between the bottom end face 213 of the jelly-roll 21 and the bottom face 11 of the housing 10 may be reduced, which may further reduce internal space of the housing 10 and improve energy density of the battery 100.

In this implementation, the separator 50 is provided parallel to the bottom end face 213 of the jelly-roll 21 to perform an effect of stably bearing the jelly-roll 21. Moreover, in order to insulate and protect the jelly-roll 21, the separator 50 is an insulating material. In view of a limited internal space of the housing 10 of the battery 100, and in order to further improve efficiency of utilizing the internal space of the housing 10 of the battery 100, the separator 50 is a sheet-like structure, so that the separator 50 bears the jelly-roll 21 while its rate of occupying the internal space of the housing 10 is reduced, and then energy density of the battery 100 is improved.

Further, considering the separator 50 performs an effect of insolating between the bottom end face 213 of the jelly-roll 21 and the bottom face 11 of the housing 10, the separator 50 has a thickness H of 0.1mm to 2mm, that is, the separator 50 may have the thickness H of 0.1mm, 0.2mm, 0.5mm, 1mm, 1.5mm, 2mm, etc. Moreover, since the rounded corner 12 of the bottom face 11 of the housing 10 has a certain size, when a spacing between the bottom end face 213 of the jelly-roll 21 and the bottom face 11 of the housing 10 is less than 0.1mm, interference will inevitably occur between the jelly-roll 21 and the rounded corner 12 of the bottom face 11 of the housing 10, and there is a great possibility that the active material inside the jelly-roll 21 will fall off, which will severely affect the stability of the electrical performance of the jelly-roll 21. When a distance between the bottom end face 213 of the jelly-roll 21 and the bottom face 11 of the housing 10 is greater than 2mm, the core assembly 20 will occupy a relatively large space of the accommodating cavity of the housing 10, resulting in an overall larger size of the battery, affecting the design of the structure of the battery, and reducing the energy density of the battery.

Optionally, as shown in Figures 6 and 8, at least one surface of the separator 50 is provided with a protruding structure 514, that is, the separator 50 has a first surface 51 and a second surface 52 which are opposite, where the first surface 51 is a surface on the side of the separator 50 facing toward the jelly-roll 21, and the second surface 52 is a surface on the side of the separator 50 facing toward the housing 10. As an example, the first surface 51 is provided with a protruding structure 514 protruding from the first surface 51, and by providing the protruding structure 514 on the first surface 51 of the separator 50, a friction force between the separator 50 and the jelly-roll 21 may be improved, and thus the jelly-roll 21 is fixed more stably on the separator 50 and does not easily slide, thereby preventing collision between the jelly-roll 21 and the housing 10. As another example, the second surface 52 is provided with a protruding structure 514 protruding from the second surface 52, and by providing the protruding structure 514 on the second surface 52 of the separator 50, a friction force between the separator 50 and the bottom face 11 may be improved, and thus the separator 50 is fixed more stably on the bottom face 11 and does not easily slide, thereby preventing collision between the jelly-roll 21 and the housing 10. Still as another example, protruding structures 514 protruding from the first surface 51 and the second surface 52 respectively are provided on the first surface 51 and the second surface 52 at the same time. By providing the protruding structure 514 on at least one surface of the separator 50, a fixing stability between the separator 50 and the jelly-roll 21 and a fixing stability between the separator and the bottom face 11 of the housing 10 may be improved, preventing the collision between the jelly-roll 21 and the housing 10.

In addition, by providing the protruding structure 514 on at least one surface of the separator 50, difficulty of processing and manufacturing the separator 50 may be reduced. When surface of the separator 50 is too smooth, two separators 50 placed on top of each other would likely be sticky, and are not easy to separate, and consequently it takes longer time to separate the separator 50 individually during manufacturing, which severely affects the production efficiency.

Specifically, the protruding structure 514 may be a boss, a protruding bump, a protruding strip, and the like, and other structures that can protrude from the surface of the separator 50 are not specifically defined in the present embodiment.

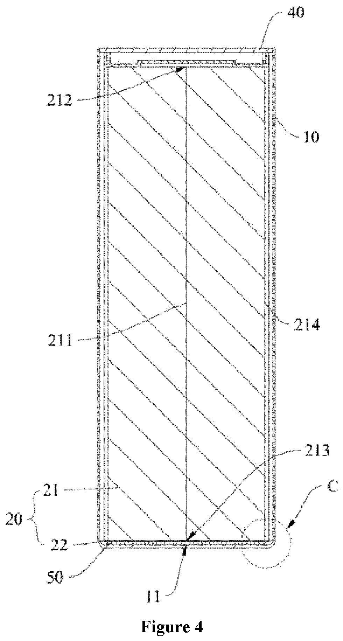

Please refer to Figures 4, 5, 6 and 7 together. In another optional implementation, the insulating sheet 22 has a circumferentially covering area 221 which covers the peripheral face of the body portion 211 and a bottom covering area 222 which covers the bottom end face 213 of the body portion 211, and except for the top end face 212 of the jelly-roll 21, the insulating sheet 22 completely covers the jelly-roll 21 through the circumferentially covering area 221 and the bottom covering area 222, so as to improve the insulating and protecting effect of the insulating sheet 22. In this case, the separator 50 and the insulating sheet 22 are provided separately, and the separator 50 is provided on a side face of the bottom covering area 222 of the insulating sheet 22 away from the body portion 211. When the separator 50 and the insulating sheet 22 are provided separately, the insulating sheet 22 may be designed as a sheet-like structure with the same overall thickness. In this case, the difficulty of manufacturing the separator 50 and the insulating sheet 22 may be reduced, that is, by separate provision, the separator 50 and the insulating sheet 22 may be produced separately, which can effectively improve the efficiency of producing the insulating sheet 22 and the separator 50. In addition, by separation provision, structures of the separator 50 and the insulating sheet 22 may be designed separately, which further reduce the difficulty of the design of the structure that needs to be considered when the structure is integrally formed.

Further, in order to implement the stability that the separator 50 bears the jelly-roll 21, the separator 50 is provided in parallel to the side face of the bottom covering area 222 of the insulating sheet 22 away from the body portion 211, so as to realize the fixing stability of the separator 50, the insulating sheet 22 and the jelly-roll 21, preventing the jelly-roll 21 and the insulating sheet 22 from falling off the separator 50; by parallel provision, the separator 50 may be stressed more evenly, preventing uneven stress of the separator 50 which leads to breakage and damage, and affects the service life of the battery 100.

When the separator 50 and the insulating sheet 22 are provided separately, the bottom covering area 222 of the insulating sheet 22 and the separator 50 have a total thickness H of 0.1mm to 2mm, that is, the bottom covering area 222 of the insulating sheet 22 and the separator 50 may have a total thickness H of 0.1mm, 0.2mm, 0.5mm, 1mm, 1.5mm, 2mm, etc. Moreover, since the rounded corner 12 of the bottom face 11 of the housing 10 has a certain size, when a spacing between the bottom end face 213 of the jelly-roll 21 and the bottom face 11 of the housing 10 is less than 0.1 mm, interference will inevitably occur between the jelly-roll 21 and the rounded corner 12 of the bottom face 11 of the housing 10, and there is a great possibility that the active material inside the jelly-roll 21 will fall off, which will severely affect the stability of the electrical performance of the jelly-roll 21. When a distance between the bottom end face 213 of the jelly-roll 21 and the bottom face 11 of the housing 10 is greater than 2mm, the core assembly 20 will occupy a relatively large space of the accommodating cavity of the housing 10, resulting in an overall larger size of the battery, affecting the design of the structure of the battery, and reducing the energy density of the battery.

Further, considering that the separator 50 needs to support the jelly-roll 21, and the insulating sheet 22 only needs to insulate and protect the jelly-roll 21, as viewed from the influence of the stress characteristics of the separator 50 and the insulating sheet 22 on their structural strength, the separator 50 may have a thickness greater than or equal to that of the insulating sheet 22, or the separator 50 has a thickness twice that of the insulating sheet 22, or the separator 50 may have a thickness which is third times of the thickness of the insulating sheet 22, and so on, so that the separator 50 can better support the jelly-roll 21 when the separator is impacted from the outside, then the separator 50 performs the buffering and shock absorption effect on the jelly-roll 21.

Specifically, the insulating sheet 22 may have a thickness of 0.1mm-1mm. When the insulating sheet 22 has a thickness that is too small, strength of the insulating sheet 22 cannot be guaranteed, and the insulating sheet is easily damaged; when the insulating sheet 22 has a thickness that is too large, the portability of the secondary battery 100 cannot be achieved, and also the housing 10 is required to have a larger accommodating cavity to accommodate the jelly-roll 21 and the insulating sheet 22, resulting in a larger size of the secondary battery 100.

The separator 50 may have a thickness of 0.1mm-2mm. When the separator 50 has a thickness that is too small, bearing strength of the separator 50 cannot be guaranteed, and the separator is easily damaged; when the separator 50 has a thickness that is too large, the portability of the secondary battery 100 cannot be achieved, and also the thicker separator 50 requires the housing 10 to have a larger accommodating cavity to accommodate the separator 50, resulting in a larger size of the secondary battery 100.

Considering comprehensively the above thickness relationship between the separator 50 and the insulating sheet 22, and conditions of the thickness ranges of the separator 50 and the insulating sheet 22, an example of the thickness relationship between the insulating sheet 22 and the separator 50 is as follows:

When the insulating sheet 22 has a thickness of 0.15mm, the separator 50 may have a thickness of 0.30mm or 0.45mm, etc.; when the insulating sheet 22 has a thickness of 0.5mm, the separator 50 may have a thickness of 1 .0mm or 1.5mm, etc.; when the insulating sheet 2220 has a thickness of1.0 mm, the separator 50 may have a thickness of 2.0 mm. the insulating sheet 22 and the separator 50.

It may be understood that the above thicknesses of the separator 50 and the insulating sheet 22 are only some examples. In practical applications, it is sufficient as long as the thicknesses of the insulating sheet 22 and the separator 50 satisfy the above thickness range at the same time, and their specific thickness values are not specifically defined in the present embodiment.

Specifically, when the separator 50 and the insulating sheet 22 are provided separately, the separator 50 is connected to a side of the bottom covering area 222 of the insulating sheet 22 away from the jelly-roll 21. By providing the separator 50 between the jelly-roll 21 and the bottom face 11 of the housing 10, the jelly-roll 21 is supported by the separator 50. When the housing 10 is impacted by the outside, the separator 50 may be used to buffer and dampen the impact from the housing 10, so as to reduce the impact effect of the external impact on the jelly-roll 21. Therefore, the jelly-roll 21 is protected better, the active material is prevented from falling off when the jelly-roll 21 is impacted, which leads to an internal short circuit.

Since the structure inside the battery 100 needs to perform an insulating and protecting effect on the jelly-roll 21, the insulating sheet 22 and the separator 50 are both insulating materials, and are made by a thermoplastic process. The insulating sheet 22 and the separator 50 made by a thermoplastic process have high toughness and good impact resistance. As an example, the insulating sheet 22 and the separator 50 are generally polymer insulating materials. For example, the separator 50 may be polypropylene, polyethylene, etc., and the insulating sheet 22 may be polypropylene, polyethylene, etc.

Further, when connection between the insulating sheet 22 and the separator 50 fails, the separator 50 will move relative to the insulating sheet 22, and in this case the insulating sheet 22 will be subject to a friction force from the separator 50, and consequently the insulating sheet 22 is damaged by friction and cannot perform a good insulating and protecting effect on the jelly-roll 21. Therefore, in order to achieve a stable connection between the separator 50 and the insulating sheet 22, a hot melting connection may be used between the insulating sheet 22 and the separator 50. A surface where the separator 50 is connected with the insulating sheet 22 is the first surface 51, where the surface 51 has a third hot melting connection position 511, and the bottom covering area 222 of the bottom face 11 of the insulating sheet 22 has a fourth hot melting connection position 2221. When the separator 50 and the insulating sheet 22 are hot melted, the third hot melting connection position 511 and the fourth hot melting connection position 2221 may be hot melted for connection, so that a stable connection between the insulating sheet 22 and the separator 50 may be achieved, and then the insulating sheet 22 performs a good insulating and protecting effect on the jelly-roll 21.

Further, in order to further improve the connection stability of the hot melting connection between the separator 50 and the insulating sheet 22, the separator 50 and the insulating sheet 22 are selected as the same material. When the separator 50 and the insulating sheet 22 are made of the same polymer material, the separator 50 and the insulating sheet 22 have the same molecular structure, and they can have a strong bonding force when hot melted, so that a stable connection between the separator 50 and the insulating sheet 22 may be implemented, relative movement between the separator 50 and the insulating sheet 22 may be further prevented, which then damages the insulating sheet 22 and causes decreases in the performance stability of the battery 100 or even unusable situations.

Optionally, the separator 50 and the insulating sheet 22 are both polypropylene materials. Since the polypropylene material is a polymer insulating material, when this material is used for the separator 50 and the insulating sheet 22, insulating and protecting for the jelly-roll 21 may be implemented. Moreover, since polypropylene material is not stretchable, a single-layer film structure is easily formed, and when this material is used for the separator 50 and the insulating sheet 22, they have a stronger bearing capacity and are not easily damaged, thereby improving the service life of the battery 100. It may be understood that, in other embodiments, the materials for the separator 50 and the insulating sheet 22 can also select polyethylene or other polymer insulating materials, and their specific materials may be selected as actually needed, and are not specifically defined in the present embodiment.

Please refer to Figure 8. In some embodiments, in order to achieve accuracy of the connection position between the separator 50 and the insulating sheet 22, corresponding positioning holes for positioning may be provided at the separator 50 and the bottom covering area 222 of the insulating sheet 22. Specifically, two first positioning holes 512 arranged spaced apart may be provided on the first surface 51 of the separator 50 (the surface where the separator 50 is connected with the insulating sheet 22), and the two first positioning holes are located at both ends of the separator and are located on the same centerline. In the actual provision, centers of the two first positioning holes 512 are located on a central axis of the first surface 51 along the length direction (i.e., direction X in Figure 8). When the first positioning hole 512 is provided on the central axis of the first positioning hole 512, the center of the separator 50 may be opposite to the center of the insulating sheet 22 to prevent the insulating sheet 22 and the jelly-roll 21 from being eccentrically provided on the separator 50, resulting in uneven bearing force of the separator 50, which in turn leads to a partial deformation or even damage of the separator 50, not having the buffering and shock absorption effect on the jelly-roll 21.

Further, distance between the two first positioning holes 512 should not be less than half of the size of the first surface 51 along the length direction, that is, half of the length L2 of the separator 50, because the larger the distance between the two first positioning holes 512 is, the smaller the linear error determined by the two first positioning holes 512 will be, and the more accurate the positioning accuracy of the first positioning hole 512 will be. Therefore, the distance between the two first positioning holes 512 should not be less than half of the length of the separator 50.

Further, in order to ensure the bearing strength of the separator 50, diameter of the first positioning hole 512 should not be greater than 3mm, and for example it may be 1mm, 1.5mm, 2mm, 2.5mm, 3mm, and the like. Regardless of the first positioning hole 512 being a blind hole or a through hole, due to presence of the first positioning hole 512, material thickness of the separator 50 at the position of the first positioning hole 512 is smaller than that of other structures not provided with an opening, so that the bearing capacity of the separator 50 at the position of the first positioning hole 512 decreases. Therefore, the diameter of the first positioning hole 512 cannot be too large.

In some embodiments, considering that the separator 50 and the insulating sheet 22 are hot melted for connection, position of the first positioning hole 512 may avoid the third hot melting connection position 511 of the separator 50, thereby avoiding the first positioning hole 512 from not being easily identified because the first positioning hole 512 is blocked by the third hot melting connection position 511.

It may be understood that, in some other embodiments, position of the first positioning hole 512 may also be provided at the third hot melting connection position 511 of the separator 50. In this case, after a relative position of the separator 50 and the insulating sheet 22 is determined, hot melting connection is performed, where the first positioning hole 512 may be filled with material through the hot melting connection, to enhance the bearing strength of the separator 50.

Correspondingly, as shown in Figure 8, since the first surface 51 of the separator 50 is connected correspondingly with the bottom covering area 222 of the insulating sheet 22 at the bottom face 11, the bottom covering area 222 at the bottom face 11 is provided with two second positioning holes 2222 whose positions and diameter magnitudes are the same as those of the two first positioning holes 512, where centers of the two second positioning holes 2222 are provided on the central axis of the bottom covering area 222 at the bottom face 11 along the length direction (i.e., direction X in Figure 8 ), ensuring that the insulating sheet 22 may be evenly connected to the separator 50, and the distance between the two second positioning holes 2222 should be the same as the distance between the two first positioning holes 512, that is, when the separator 50 and the insulating sheet 22 are properly connected, the first positioning hole 512 and the second positioning hole 2222 may completely coincide.

It may be understood that the first positioning hole 512 and the second positioning hole 2222 may be both through holes. When they are through holes, the electrolyte may circulate through the positioning holes, which may improve infiltration degree of the electrolyte.

In some embodiments, considering that the separator 50 and the insulating sheet 22 are hot melted for connection, position of the second positioning hole 2222 may avoid the fourth hot melting connection position 2221 of the insulating sheet 22, thereby avoiding the second positioning hole 2222 from not being easily identified because the second positioning hole 2222 is blocked by the fourth hot melting connection position 2221.

It may be understood that, in some other embodiments, the position of the second positioning hole 2222 may be provided at the fourth hot melting connection position 2221 of the insulating sheet 22. In this case, after a relative position of the separator 50 and the insulating sheet 22 is determined, hot melting connection is performed, where the second positioning hole 2222 may be filled with material through the hot melting connection, to enhance the bearing strength of the insulating sheet 22.

Please refer to Figure 8. In some embodiments, the separator 50 is also provided thereon with a foolproof structure, and by providing the foolproof structure, an installation error of the separator may be effectively prevented. Specifically, the foolproof structure may be a foolproof hole 513, and the foolproof hole 513 is provided to be deviated from the center line of the separator 50, so that the foolproof function of the foolproof hole 513 is performed; and the foolproof hole 513 is a through hole, and by providing the foolproof hole 513 as a through hole, infiltration effect of the electrolyte may be improved.

In connection with what is shown in Figure 6, in some embodiments, since the accommodating cavity of the housing 10 is a square cavity, and four corners of the accommodating cavity are rounded corners 12, when the separator 50 is placed inside the accommodating cavity of the housing 10, in order to achieve a tight cooperation between the separator 50 and the housing 10, the separator 50 is designed as a rectangular sheet-like structure, and four corners 52 of the separator 50 are designed as rounded corner structures to achieve the tight matching between the separator 50 and the housing 10. If four corners 52 of the separator 50 are in a right-angle structure, edges of the separator 50 and the housing 10 may be in a line contact, and in this case a force that the separator 50 is subject from the housing 10 will concentrate at the corners 52 positions of the separator 50. Consequently, damage may easily occur at the corner 52 position of the separator 50. Therefore, when four corners 52 of the separator 50 are designed to be rounded corners in the present embodiment, the separator 50 and the housing 10 may be in a face contact, and the separator 50 may evenly disperse the force from the housing 10 to respective positions of the separator 50 to reduce the pressure on the corners 52 and ensure the structural strength of the separator 50.

Please refer to Figures 7 and 8 again. Further, in order that the separator 50 performs a bearing effect on the jelly-roll 21, size of the separator 50 and size of the jelly-roll 21 should satisfy:

$$L2 = L1 \pm 5mm;$$

$$W2 = W1 \pm 5mm;$$

wherein L2 is a length of the separator 5030, and W2 is a width of the separator 5030.

As may be seen from the foregoing, L1 is a length of the jelly-roll 21, and W1 is a width of the jelly-roll 21, that is, length L2 of the separator 50 may be L1+5mm, L1+4.6mm, L1+3mm, etc., and width W2 of the separator 50 may be W1+6mm, W1+5mm, W1+3mm, etc. It may be understood that the above sizes in length and width directions of the separator 50 are just some examples. In the actual design process, it is sufficient as long as the size of the separator 50 and the size of the jelly-roll 21 satisfy the above relationship expression, and sizes thereof are not specifically defined in the present embodiment.

Considering that the insulating sheet 22 is mainly used for covering the jelly-roll 21, the following will describe in detail how the insulating sheet 22 covers the jelly-roll 21 with reference to the accompanying drawings.

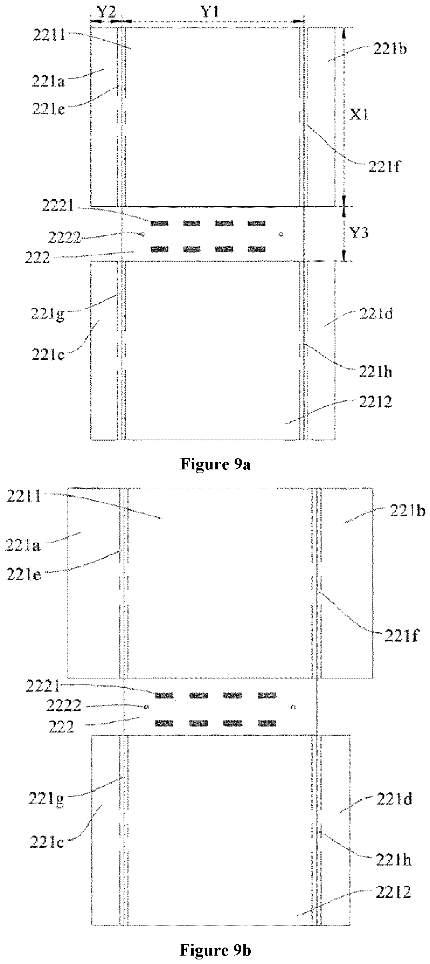

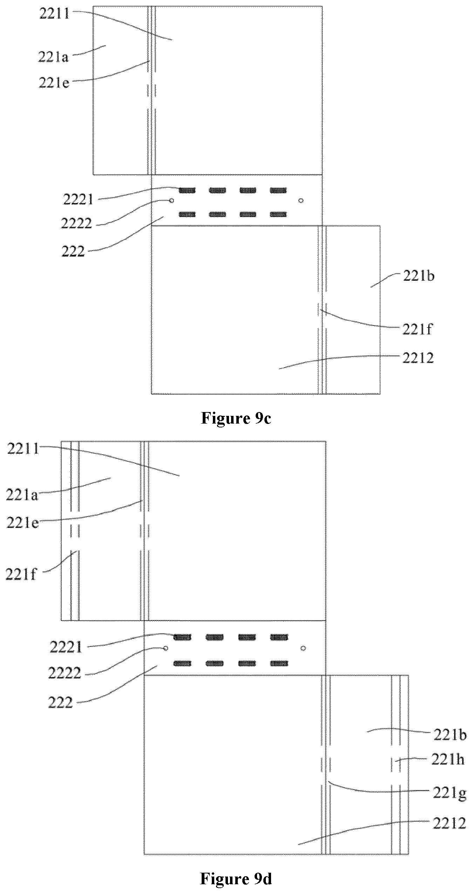

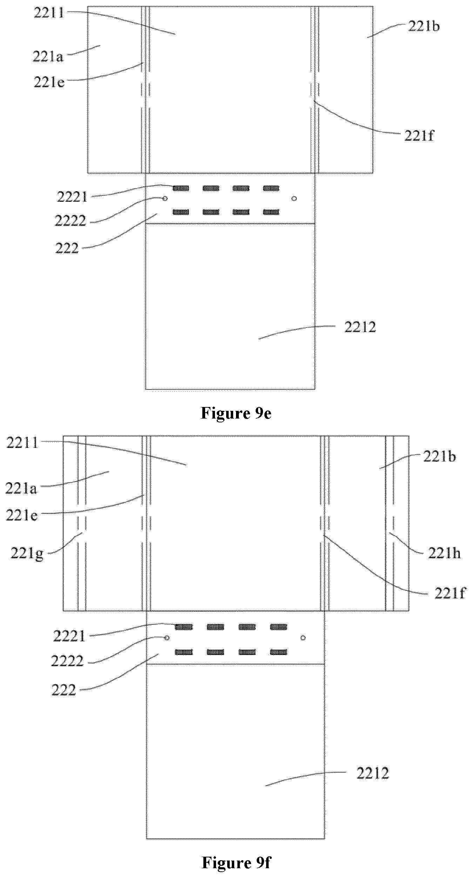

In some embodiments, please refer to Figures 9a, 9b, 9c, 9d, 9e, and 9f. The circumferentially covering area 221 of the insulating sheet 22 comprises a first covering area 2211 and a second covering area 2212, the first covering area 2211 and the second covering area 2212 are respectively connected at both sides of the bottom covering area 222. Through enclosing of the first covering area 2211 and the second covering area 2212, the insulating sheet 22 forms a cavity for covering the jelly-roll 21, completely covering the peripheral face of the jelly-roll 21.

In an example, as shown in Figure 9a, both sides of the first covering area 2211 and the second covering area 2212 are provided with flanks, and the first covering area 2211 and the second covering area 2212 are covered on a first side face 214 of the jelly-roll 21, and the flanks are covered on a second side face 215 of the jelly-roll 21. Specifically, a first flank 221a and a second flank 221b are respectively provided on both sides of the first covering area 2211. The first flank 221a and the second flank 221b have the same shape and size. A third flank 221c and a fourth flank 221d are respectively provided on both sides of the second covering area 2212. The third flank 221c and the fourth flank 221d have the shape and size. When the insulating sheet 22 forms a cavity covering the jelly-roll 21, the first flank 221a and the second flank 221b are respectively folded toward the second side face 215 of the jelly-roll 21, and the third frank 221c and the fourth frank 221d are also folded toward the second side face 215 of the jelly-roll 21, so that the first frank 221a is connected with the third frank 221c, and the second frank 221b is connected with the fourth flank 221d, thereby covering the second side face 215 of the jelly-roll 21 by the first flank 221a, the second flank 221b, the third flank 221c, and the fourth flank 221d.

Further, when the second side face 215 of the jelly-roll 21 is covered by a flank, as shown by the structural form of the insulating sheet 22 in Figure 9a, a connection mode of the first flank 221a and the third flank 221c may be that an edge of the first flank 221a is just spliced with an edge of the third flank 221c, and the second side face 215 of the jelly-roll 21 is completely covered, and in this case, a complete coverage of the jelly-roll 21 may be achieved with the minimum area of the insulating sheet 22, thereby reducing consumption of the material of the insulating sheet 22 and saving the cost in manufacturing the battery.

Or as shown by the structural form of the insulating sheet 22 in Figure 9b, the connection mode of the first flank 221a and the third flank 221c may be that the first flank 221a and the third flank 221c at least partially overlap, that is, an edge of the first flank 221a may be lapped on the third flank 221c; and in this case, due to overlapping portion between the first flank 221a and the third flank 221c, connection portion between the first flank 221a and the third flank 221c may be made tighter, and the overlapping connection can thicken the material thickness of the connection portion, and may further strengthen the structural strength of the connection portion, which may effectively prevent the insulating sheet 22 from being damaged.

It may be understood that, regardless of a mode where the edge of the first flank 221a and the edge of the third flank 221c are just connected, or a mode where the first flank 221a and the third flank 221c partially overlap, the first flank 221a and the third flank 221c may have the same or different size, as long as the above connection mode may be achieved, and magnitude of the relative size between the first flank 221a and the third flank 221c is not specifically defined in the present embodiment.

Since the second flank 221b and the first flank 221a have the same structural size, and the third flank 221c and the fourth flank 221d have the same structural size, the connection mode of the second flank 221b and the fourth flank 221d can refer to the above connection mode of the first flank 221a and the third flank 221c, which will not be repeated here.

In the above solution, a case is provided in which the first flank 221a and the second flank 221b have the same size and shape, and the third flank 221c and the fourth flank 221d have the same size and shape. Considering that the structure of the jelly-roll 21 is approximately a square block structure, when the first flank 221a and the second flank 221b have a different size, and the third flank 221c and the fourth flank 221d have a different size, it is sufficient as long as a full covering of the jelly-roll 21 may be achieved, where a size relationship between the first flank 221a and the second flank 221b and a size relationship between the third flank 221c and the fourth flank 221d are not specifically defined here.

Further, as shown by the structural form of the insulating sheet 22 in Figures 9a and 9b, a first bending area 221e is provided between the first flank 221a and the first covering area 2211, and a second bending area 221f is provided between the second flank 221b and the first covering area 2211, a third bending area 221g is provided between the third flank 221c and the second covering area 2212, and a fourth bending area 221h is provided between the fourth flank 221d and the second covering area 2212. The first bending area 221e, the second bending area 221f, the third bending area 221g and the fourth bending area 221h, when the insulating sheet 22 forms a cavity covering the jelly-roll 21, may form four rounded corners 12 of the circumferentially covering area 221. That is, by providing the above bending areas, the flank may be bent easier when bending with respect to the covering area, and the insulating sheet 22 can more easily form a covering cavity.

The bending area may be formed by imprinting indentation on the insulating sheet 22, and a bending area may be formed between every two indentations. The insulating sheet 22 may be bent easily at the indentation position by means of imprinting indentation, and the insulating sheet 22 may easily form a covering cavity.

It may be understood that, the bending area may also be formed integrally when the insulating sheet 22 is formed, or formed by other methods, that is, the formation thereof is not specifically defined in the present embodiment.

In another example, as shown by the structural form of the insulating sheet 22 in Figure 9c, a side of the first covering area 2211 and a side of the second covering area 2212 are provided with flanks, and the first covering area 2211 and the second covering area 2212 are covered on a first side face 214 of the jelly-roll 21, and the flanks are covered on the second side face 215 of the jelly-roll 21. Specifically, a first flank 221a is provided at a side of the first covering area 2211. A second flank 221b is provided at the other side of the second covering area 2212 opposite to the first flank 221a. When the insulating sheet 22 forms a cavity covering the jelly-roll 21, the first flank 221a is folded toward the second side face 215 of the jelly-roll 21, and the second flank 221b is also folded toward the second side face 215 of the jelly-roll 21, so that the first frank 221a is connected with a side of the second covering area 2212 not provided with a flank, the second flank 221b is connected with a side of the first covering area 2211 not provided with a flank, thereby covering the second side face 215 of the jelly-roll 21 by the first flank 221a and the second flank 221b.

Further, when the second side face 215 of the jelly-roll 21 is covered by a flank, as shown by the structural form of the insulating sheet 22 in Figure 9c, a connection mode of the first flank 221a and a side of the second covering area 2212 not provided with a flank may be that an edge of the first flank 221a is just spliced with an edge of a side of the second covering area 2212 not provided with a flank, and the second side face 215 of the jelly-roll 21 is completely covered, and in this case, a complete coverage of the jelly-roll 21 may be achieved with the minimum area of the insulating sheet 22, thereby reducing consumption of the material of the insulating sheet 22 and saving the cost in manufacturing the battery. Or as shown by the structural form of the insulating sheet 22 in Figure 9d, a connection mode of the first flank 221a and a side of the second covering area 2212 not provided with a flank may be that the first flank 221a and a side of the second covering area 2212 not provided with a flank at least partially overlap, that is, an edge of the first flank 221a may be lapped on the second covering area 2212; and in this case, due to overlapping portion between the first flank 221a and the second covering area 2212, connection portion between the first flank 221a and the second covering area 2212 may be made tighter, and the overlapping connection can thicken the material thickness of the connection portion, and may further strengthen the structural strength of the connection portion, which may effectively prevent the insulating sheet 22 from being damaged.

Since two second side faces 215 of the jelly-roll 21 have the same structural size, the connection mode of the second flank 221b and the first covering area 2211 can refer to the above connection mode of the first flank 221a and the second covering area 2212, which will not be repeated here.

Please refer to the structural form of the insulating sheet 22 shown in Figure 9c again. When the connection mode of the first flank 221a and a side of the second covering area 2212 not provided with a flank may be that an edge of the first flank 221a is just spliced with an edge of a side of the second covering area 2212 not provided with a flank, a first bending area 221e is provided between the first flank 221a and the first covering area 2211, and a second bending area 221f is provided between the second flank 221b and the second covering area 2212. The first bending area 221e and the second bending area 221f, when the insulating sheet 22 forms a cavity covering the jelly-roll 21, may form two rounded corners 12 of the circumferentially covering area 221, that is, by providing the above bending areas, the flank may be bent easier when bending with respect to the covering area, and the insulating sheet 22 can more easily form a covering cavity.

Please refer to the structural form of the insulating sheet 22 shown in Figure 9d. When the connection mode of the first flank 221a and a side of the second covering area 2212 not provided with a flank may be that the first flank 221a and a side of the second covering area 2212 not provided with a flank at least partially overlap, a first bending area 221e is provided between the first flank 221a and the first covering area 2211, a second bending area 221f is provided at overlapping portion of the first flank 221a and the second covering area 2212, a third bending area 221g is provided between the second flank 221b and the second covering area 2212, and a fourth bending area 221h is provided at overlapping portion of the second flank 221b and the first covering area 2211. The first bending area 221e, the second bending area 221f, the third bending area 221g and the fourth bending area 221h, when the insulating sheet 22 forms a cavity covering the jelly-roll 21, may form four rounded corners 12 of the circumferentially covering area 221, that is, by providing the above bending areas, the flank may be bent easier when bending with respect to the covering area, and the insulating sheet 22 can more easily form a covering cavity.

In another example, as shown by the structural form of the insulating sheet 22 in Figure 9e, both sides of the first covering area 2211 are not provided with a flank, and both sides of the second covering area 2212 are not provided with flanks. The first covering area 2211 and the second covering area 2212 are covered on the first side face 214 of the jelly-roll 21, and the flanks are covered on the second side face 215 of the jelly-roll 21. Specifically, that is, a first flank 221a and a second flank 221b are respectively provided on both sides of the first covering area 2211. When the insulating sheet 22 forms a cavity covering the jelly-roll 21, the first flank 221a is folded toward the second side face 215 of the jelly-roll 21, and the second frank 221b is also folded toward the second side face 215 of the jelly-roll 21, so that the first frank 221a is connected with the second covering area 2212, and the second frank 221b is connected with the second covering area 2212, thereby covering the second side face 215 of the jelly-roll 21 by the first flank 221a and the second flank 221b.

Further, as shown by the structural form of the insulating sheet 22 in Figure 9e, when the second side face 215 of the jelly-roll 21 is covered by a flank, a connection mode of the first flank 221a and the second covering area 2212 may be that an edge of the first flank 221a is just spliced with an edge of a side of the second covering area 2212 not provided with a flank, and the second side face 215 of the jelly-roll 21 is completely covered, and in this case, a complete coverage of the jelly-roll 21 may be achieved with the minimum area of the insulating sheet 22, thereby reducing consumption of the material of the insulating sheet 22 and saving the cost in manufacturing the battery. Or as shown by the structural form of the insulating sheet 22 in Figure 9f, the connection mode of the first flank 221a and the second covering area 2212 may be that the first flank 221a and a side of the second covering area 2212 not provided with a flank at least partially overlap, that is, an edge of the first flank 221a may be lapped on the second covering area 2212; and in this case, due to overlapping portion between the first flank 221a and the second covering area 2212, connection portion between the first flank 221a and the second covering area 2212 may be made tighter, and the overlapping connection can thicken the material thickness of the connection portion, and may further strengthen the structural strength of the connection portion, which may effectively prevent the insulating sheet 22 from being damaged.

Since two second side faces 215 of the jelly-roll 21 have the same structural size, the connection mode of the second flank 221b and the second covering area 2212 can refer to the above connection mode of the first flank 221a and the second covering area 2212, which will not be repeated here.

Please refer to the structural form of the insulating sheet 22 shown in Figure 9e again. When the connection mode of the first flank 221a and the second covering area 2212 may be that an edge of the first flank 221a is just spliced with an edge of the second covering area 2212, a first bending area 221e is provided between the first flank 221a and the first covering area 2211, and a second bending area 221f is provided between the second flank 221b and the first covering area 2211. The first bending area 221e and the second bending area 221f, when the insulating sheet 22 forms a cavity covering the jelly-roll 21, may form two rounded corners 12 of the circumferentially covering area 221, that is, by providing the above bending areas, the flank may be bent easier when bending with respect to the covering area, and the insulating sheet 22 can more easily form a covering cavity.

Please refer to the structural form of the insulating sheet 22 shown in Figure 9f. When the connection mode of the first flank 221a and the second covering area 2212 may be that the first flank 221a and a side of the second covering area 2212 not provided with a flank at least partially overlap, a first bending area 221e is provided between the first flank 221a and the first covering area 2211, a second bending area 221f is provided at overlapping portion of the first flank 221a and the second covering area 2212, a third bending area 221g is provided between the second flank 221c and the first covering area 2211, and a fourth bending area 221h is provided at overlapping portion of the second flank 221d and the second covering area 2212. The first bending area 221e, the second bending area 221f, the third bending area 221g and the fourth bending area 221h, when the insulating sheet 22 forms a cavity covering the jelly-roll 21, may form four rounded corners 12 of the circumferentially covering area 221, that is, by providing the above bending areas, the flank may be bent easier when bending with respect to the covering area, and the insulating sheet 22 can more easily form a covering cavity.

In order to realize a complete covering of the jelly-roll 21 by the insulating sheet 22, now the structure of the above first insulating sheet 22, that is, the structure of the insulating sheet 22 as shown in Figure 9a is taken as an example, where relationship between a size of each portion of the insulating sheet 22 and a size of the jelly-roll 21 should satisfy:

Length X1 of the first covering area 2211 should not be less than height H1 of the jelly-roll 21, width Y1 of the first covering area 2211 should not be less than length L1 of the jelly-roll 21, width Y2 of the first flank 221a should not be less than half of width W1 of the jelly-roll 21, and width Y3 of the second covering area 2212 should not be less than width W1 of the jelly-roll 21;

that is:

$$X1 \geq H1;$$

$$Y1 \geq L1;$$

$$Y2 \geq \frac{1}{2}W1;$$

$$Y3 \geq W1;$$

moreover, in order to realize tightness of covering of the jelly-roll 21 by the insulating sheet 22, and to save space, the size relationship between the insulating sheet 22 and the jelly-roll 21 should satisfy:

$$X1 \leq H1+5mm;$$

$$Y1 \leq L1+5mm;$$

$$Y2 \leq W1;$$

$$Y3 \leq W1+5mm;$$

that is, length X1 of the first covering area 2211 may be H1, H1+0.1mm, H1+0.2mm, H1+0.5mm, H1+1mm, H1+2mm, H1+5mm; width Y1 of the first covering area 2211 may be L1, L1+0.1mm, L1+0.2mm, L1+0.5mm, L1+1mm, L1+2mm, L1+5mm; width Y2 of the first flank 221a may be

$$\frac{1}{2}W1, \frac{2}{3}W1, \frac{3}{4}W1$$

, W1; width Y3 of the second covering region 2212 may be W1, W1+0.1mm, W1+0.2mm, W1+0.5mm, W1+1mm, W1+2mm, W1+5mm.

It may be understood that the above sizes of the insulating sheet 22 are just some examples. In the actual design process, it is sufficient as long as the size of the insulating sheet 22 and the size of the jelly-roll 21 satisfy the above relationship expression, and sizes thereof are not defined specifically in the present embodiment.

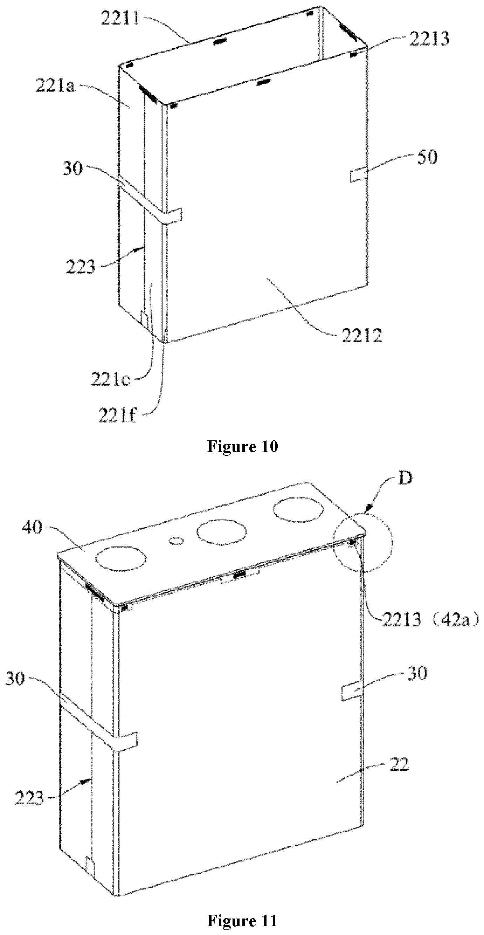

In some embodiments, please refer to Figure 10. The battery 100 further comprises a glue tape 30, and the glue tape 30 may be configured to be bonded at the two connection portions of the insulating sheet 22, so that the insulating sheet 22 is enclosed to form a cavity covering the jelly-roll 21, and in this case, the glue tape 30 is located outside the cavity. In this way, by providing the glue tape 30, the circumferentially covering area 221 and the bottom covering area 222 may be connected together, and thus not only the insulating sheet 22 can effectively cover the jelly-roll 21, but also the insulating sheet 22 is facilitated to be disassembled in case of subsequent maintenance to the jelly-roll 21 inside the battery 100.

Further, the glue tape 30 may be pasted to connection portion of the first flank 221a and the third flank 221c, and connection portion of the second flank 221b and the fourth flank 221d, of the insulating sheet 22. By pasting the glue tape 30 at the above position, fixing of the insulating sheet 22 may be performed, and weak position of the insulating sheet 22 may be strengthened. It may be understood that only one pasting position of the glue tape 30 is given in the present embodiment, and the specific pasting position may be adjusted as actually needed, which is not specifically defined in the present embodiment.

Further, no glue layer is provided between the insulating sheet 22 and the jelly-roll 21, that is, a surface of a side of the insulating sheet 22 inside the cavity is not provided with a glue layer, then the insulating sheet 22 and the jelly-roll 21 are mainly fixed by the above glue tape 30. If the cavity of the insulating sheet 22 is fixed relative to the jelly-roll 21, a glue layer is used for fixing, that is, a glue layer is provided on a surface of a side of the insulating sheet 22 inside the cavity, and then the insulating sheet 22 is pasted on the glue layer. During subsequent maintenance to the jelly-roll 21, the insulating sheet 22 is not easily disassembled. And also residual glue will remain on the surface of the jelly-roll 21, which affects the subsequent installation of a new insulating sheet 22. In addition, by canceling provision of the glue layer on outer surface of the jelly-roll 21, heat of the jelly-roll 21 may be avoided from not being dissipated due to presence of the glue layer, that is, by canceling provision of the glue layer, heat dissipation performance of the jelly-roll 21 may be improved. In addition, by canceling provision of the glue layer, there is a certain spacing space between the jelly-roll 21 and the insulating sheet 22, and in this case space where the electrolyte circulate and flow may be enlarged, and infiltration degree of the electrolyte may be improved.

In some embodiments, in order to circulate and flow the electrolyte between the insulating sheet 22 and the jelly-roll 21, to improve the infiltration effect of the electrolyte, the insulating sheet 22 is provided thereon with a liquid-guiding flow channel 223, which then provides the electrolysis with a circulation channel inside the housing 10. Specifically, as may be seen from the foregoing, the cavity enclosed by the insulating sheet 22 for covering the jelly-roll 21 is mainly formed by the above peripheral covering area 221 and bottom covering area 222 bonded by a glue tape. Therefore, the liquid-guiding flow channel 223 may be a gap where a junction of each covering area is formed, for example a junction between the first flank 221a and the third flank 221c, a junction between the second flank 221b and the fourth flank 221d, a connection gap between the first flank 221a and the bottom covering area 222, and a connection gap between the third flank 221c and the bottom covering area 222, and the like.

Since connection of each covering area of the insulating sheet 22 is fixed by the glue tape 30, there is a connection gap that can allow the electrolyte to pass through at connection boundary of each covering area. In this case, it is no longer necessary to provide separately the liquid-guiding flow channel 223 on the insulating sheet 22, which reduces the difficulty of the design of the structure of the insulating sheet 22 while infiltration effect of the electrolyte is improved.

It may be understood that, in other embodiments, the liquid-guiding flow channel 223 may also be formed by providing holes directly at any position of the peripheral covering area 221 of the insulating sheet 22. For example, the first covering area 2211, the first flank 221a, the second flank 221b, the second covering area 2212, the third flank 221c, and the fourth flank 221d are provided with through holes. Also, the electrolyte can circulate and flow in the space between the jelly-roll 21 and the insulating sheet 22 and the space between the insulating sheet 22 and the housing 10, thereby improving infiltration efficiency of the electrolyte.

As may be seen, the formation mode of the liquid-guiding flow channel 223 is not specifically defined in the present embodiment as long as the electrolyte circulates and flows.

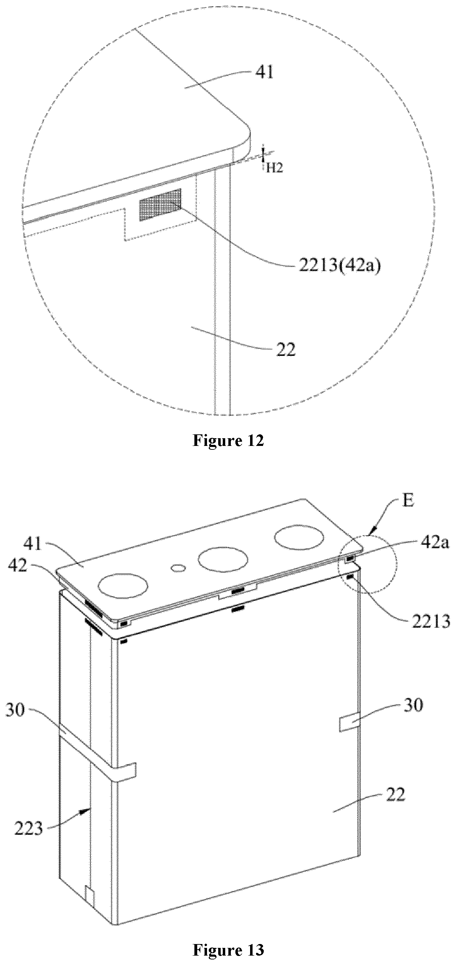

Please refer to Figures 11 to 13. In some embodiments, the battery 100 further comprises a top cover assembly 40, the top cover assembly 40 is covered on an opening of the accommodating cavity of the housing 10, and the top cover assembly 40 is connected to the housing 10 in a sealed manner, thereby performing an effect of closing the accommodating cavity, where the top cover assembly 40 is provided to be spaced apart from the insulating sheet 22.

The top cover assembly 40 comprises a top cover plate 41 and a lower plastic member 42 connected to a lower surface of the top cover plate 41 and facing toward the jelly-roll 21. The top cover plate 41 is connected to the opening of the housing 10 by welding to close the accommodating cavity of the housing 10. A plurality of connection bosses 421 extending toward the jelly-roll 21 are provided at the peripheral edge of the lower plastic member 42. After the insulating sheet 22 forms a cavity for covering the jelly-roll 21, the jelly-roll 21 is placed inside the cavity. In order to achieve a comprehensive protection for the jelly-roll 21, the insulating sheet 22 is covering the outer peripheral surface of each connection boss 421 at the same time. Considering that the connection boss 421 is also made of plastic material, in order to achieve a stable connection between the insulating sheet 22 and the lower plastic member 42, each connection boss 421 has a first hot melting connection position 42a, and the insulating sheet 22 also has a second hot melting connection position 2213, where the insulating sheet 22 and the plurality of connection bosses 421 are hot melted for connection in the hot melting connection area, thereby achieving a stable connection between the insulating sheet 22 and the top cover assembly 40, then achieving a comprehensive protection for the jelly-roll 21.

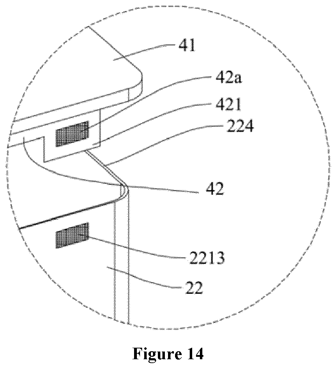

Specifically, as shown in Figure 14, the first hot melting connection position 42a is provided on a face of each connection boss 421 facing outside, and since the connection boss 421 is a structure extending toward a side of the jelly-roll 21, the face of the connection boss 421 facing outside has a larger area, and in this case area of the first hot melting connection position 42a may be increased accordingly. When the insulating sheet 22 is hot melted for connection through the first hot melting connection position 42a, its hot melting connection area is larger, and connection stability of the insulating sheet 22 is stronger.

Further, there is a spacing between the top surface 224 of the insulating sheet 22, i.e., a face facing toward the top cover plate 41, and the lower surface of the top cover plate 41 (i.e., a face of the top cover plate 41 facing toward the jelly-roll 21). In this way, on the one hand, the insulating sheet 22 may be prevented from interfering with the top cover assembly 40 during welding the top cover assembly 40 and the housing 10, resulting in curling of the insulating sheet 22 and then deformation of the insulating sheet 22. On the other hand, when the insulating sheet 22 is provided to be spaced apart from the top cover assembly 40, by providing a spacing, a gas flow channel may be formed between the insulating sheet 22 and the top cover plate 41, which gas flow channel allows gas between the insulating sheet 22 and the jelly-roll 21 to flow to between the insulating sheet 22 and the housing 10. Then the space between the insulating sheet 22 and the jelly-roll 21 may be communicated with the space between the housing 10 and the insulating sheet 22. Therefore, gas inside the housing 10 may circulate and flow in the housing 10, and then heat dissipation function of the jelly-roll 21 may be improved, air pressure difference between the interior and exterior of the housing 10 may be reduced, and the safety of the battery 100 may be improved. In addition, considering that the jelly-roll 21 would generate gas during the use of the battery 100, since the space between the housing 10 and the insulating sheet 22 may be communicated with the space between the insulating sheet 22 and the jelly-roll 21, the gas generated by the jelly-roll 22 may flow to between the insulating sheet 22 and the housing 10, and then a punching force of the gas generated by the jelly-roll 21 on the insulating sheet 21 may be alleviated, and the safety performance of the battery 100 may be further improved.

The battery disclosed by the embodiments of the present application has been described in detail above, and the principles and implementations of the present application have been described with specific examples herein.

## Claims

1. A battery (100) comprising:

   a housing (10) having an accommodating cavity having an opening;
   a core assembly (20) provided in the accommodating cavity and comprising a jelly-roll (21) and an insulating sheet (22) covering the jelly-roll (21), wherein the jelly-roll (21) comprises a body portion (211), and the body portion (211) comprises a top end face (212) and a bottom end face (213) located at two ends of the body portion (211) respectively, and a peripheral face connected to the top end face (212) and the bottom end face (213), and the insulating sheet (22) covers the peripheral face and the bottom end face (213);
   a separator (50) provided in the housing (10) and separates the bottom end face (213) of the jelly-roll (21) from a bottom face (11) of the housing (10); and
   a top cover assembly (40) connected to the housing (10) in a sealed manner and closes the opening of the housing (10), and a glue tape (30);
   wherein the top cover assembly (40) is spaced apart from the insulating sheet (22); and
   wherein the insulating sheet (22) comprises a circumferentially covering area (221) which covers the peripheral face of the body portion (211), and a bottom covering area (222) which covers the bottom end face (213) of the body portion (211), and the separator (50) is provided on a side face of the bottom covering area (222) away from the body portion (211); and
   wherein the insulating sheet (22) is provided thereon with a liquid-guiding flow channel (223) which partially guides electrolyte located between the jelly-roll (21) and the insulating sheet (22) to a location between the insulating sheet (22) and the housing (10);

   **characterized in that**

   an air flow channel is formed between the insulating sheet (22) and the top cover assembly (40); and
   wherein the top cover assembly (40) comprises a top cover plate (41) for closing the opening of the housing (10), and a lower plastic member (42) connected to a lower surface of the top cover plate (41) facing the jelly-roll (21);
   a plurality of connection bosses (421) are provided at a peripheral edge of the lower plastic member (42) and extending towards the jelly-roll (21), wherein the circumferentially covering area (221) is connected to an outer peripheral surface of the plurality of connection bosses (421); and
   wherein a top surface (224) of the insulating sheet (22) facing the top cover plate (41) is spaced apart from the lower surface of the top cover plate (41) facing the jelly-roll (21); and
   wherein the glue tape (30) is provided on the circumferentially covering area (221) and between the circumferentially covering area (221) and the bottom covering area (222), so that a cavity for covering the jelly-roll (21) is formed and enclosed by the circumferentially covering area (221) and the bottom covering area (222), and the glue tape (30) is located outside the cavity; and
   wherein the liquid-guiding flow channel (223) is a gap where a junction of each covering area is formed.

2. The battery (100) according to claim 1, wherein the insulating sheet (22) comprises a circumferentially covering area (221), the circumferentially covering area (221) covers the peripheral face of the body portion (211), and the separator (50) is integrally formed in the insulating sheet (22) and serves as a bottom covering area (222) which covers the bottom end face (213) of the body portion (211).

3. The battery according to claim 1 or 2, wherein the separator (50) is a sheet made of insulating material and is arranged to run parallel to the bottom end face (213), and the sheet made of insulating material has a thickness of 0.1mm-2mm.

4. The battery according to claim 1 to 3, wherein at least one surface of the separator (50) is provided with a protruding structure.

5. The battery (100) according to any one of claims 1 to 4,

   wherein the separator (50) is provided parallel to the side face of the bottom covering area (222) away from the body portion (211);
   wherein the separator (50) and the bottom covering area (222) have a total thickness of 0.1 mm - 2 mm.

6. The battery (100) according to claim 5, wherein the separator (50) and the bottom covering area (222) are provided thereon with corresponding positioning holes for positioning; wherein the separator (50) is provided thereon with two first positioning holes (512), the bottom covering area (222) is provided thereon with two second positioning holes (2222), and the two first positioning holes (512) are located respectively on two ends of the separator (50) and located on a same center line;
   wherein the separator (50) is further provided thereon with a foolproof hole (513) which is away from the center line of the separator (50).

7. The battery (100) according to claim 5 or 6, wherein the separator (50) is connected with the bottom covering area (222) by means of hot melting.

8. The battery (100) according to any one of claims 5 or 6, wherein the separator (50) and the bottom covering area (222) are made of a same material through a thermoplastic process.

9. The battery (100) according to any one of claims 4 to 8, wherein a glue layer is not provided between the jelly-roll (21) and surfaces of the circumferentially covering area (221) and the bottom covering area (222) of the insulating sheet (22) facing toward the jelly-roll (21).

10. The battery (100) according to any one of claims 1 to 9, wherein the separator (50) and the jelly-roll (21) satisfy:

$$L1 + 3 \text{ mm} \leq L2 \leq L1 + 6 \text{ mm};$$

$$W1 + 3 \text{ mm} \leq W2 \leq W1 + 6 \text{ mm};$$

   wherein, L1 is a length of the jelly-roll (21), W1 is a width of the jelly-roll (21);

L2 is a length of the separator (50), and W2 is a width of the separator (50);
wherein the body portion (211) of the jelly-roll (21) is approximately a square block, with L1 in a length direction thereof, W1 in a width direction thereof, and H1 in a height direction thereof, wherein the jelly-roll (21) as a whole approximately forms a cuboid structure with a length × width × height of L1 × W1 × H1.

**Patentansprüche**

1. Batterie (100), umfassend:

   ein Gehäuse (10) aufweisend einen Aufnahmehohlraum aufweisend eine Öffnung;
   eine Kernanordnung (20), die in dem Aufnahmehohlraum vorgesehen ist und eine Gelee-Rolle (21) und eine die Gelee-Rolle (21) abdeckende Isolierfolie (22) umfasst, wobei die Gelee-Rolle (21) einen Körperbereich (211) umfasst, und der Körperbereich (211) eine obere Endfläche (212) und eine untere Endfläche (213), die jeweils an zwei Enden des Körperbereichs (211) angeordnet sind, und eine Umfangsfläche, die mit der oberen Endfläche (212) und der unteren Endfläche (213) verbunden ist, umfasst, und die Isolierfolie (22) die Umfangsfläche und die untere Endfläche (213) abdeckt;
   einen Separator (50), der in dem Gehäuse (10) vorgesehen ist und die untere Endfläche (213) der Gelee-Rolle (21) von einer Bodenfläche (11) des Gehäuses (10) trennt; und
   eine obere Abdeckungsanordnung (40), die mit dem Gehäuse (10) in abgedichteter Weise verbunden ist und die Öffnung des Gehäuses (10) verschließt, und
   ein Klebeband (30);
   wobei die obere Abdeckungsanordnung (40) von der Isolierfolie (22) beabstandet ist; und
   wobei die Isolierfolie (22) einen Umfangsabdeckbereich (221), der die Umfangsfläche des Körperbereichs (211) abdeckt, und einen Bodenabdeckbereich (222), der die untere Endfläche (213) des Körperbereichs (211) abdeckt, umfasst, und der Separator (50) auf einer Seitenfläche des Bodenabdeckbereichs (222) weg von dem Körperbereich (211) vorgesehen ist; und
   wobei die Isolierfolie (22) darauf mit einem flüssigkeitsleitenden Strömungskanal (223) versehen ist, der den zwischen der Gelee-Rolle (21) und der Isolierfolie (22) befindlichen Elektrolyt teilweise zu einer Stelle zwischen dem Isolierfolie (22) und dem Gehäuse (10) leitet;
   **dadurch gekennzeichnet, dass**
   ein Luftströmungskanal zwischen der Isolierfolie (22) und der oberen Abdeckungsanordnung (40) ausgebildet ist; und

wobei die obere Abdeckungsanordnung (40) eine obere Abdeckplatte (41) zum Verschließen der Öffnung des Gehäuses (10) und ein unteres Kunststoffelement (42) umfasst, das mit einer unteren Fläche der oberen Abdeckplatte (41) verbunden ist, die der Gelee-Rolle (21) zugewandt ist;

eine Vielzahl von Verbindungsvorsprüngen (421) an einer Umfangskante des unteren Kunststoffelements (42) vorgesehen sind und sich in Richtung der Gelee-Rolle (21) erstrecken, wobei der Umfangsabdeckbereich (221) mit einer äußeren Umfangsfläche der Vielzahl von Verbindungsvorsprüngen (421) verbunden ist; und

wobei eine der oberen Abdeckplatte (41) zugewandte obere Fläche (224) der Isolierfolie (22) von der der Gelee-Rolle (21) zugewandten unteren Fläche der oberen Abdeckplatte (41) beabstandet ist; und

wobei das Klebeband (30) auf dem Umfangsabdeckbereich (221) und zwischen dem Umfangsabdeckbereich (221) und dem Bodenabdeckbereich (222) vorgesehen ist, so dass ein Hohlraum zum Abdecken der Gelee-Rolle (21) gebildet und durch den Umfangsabdeckbereich (221) und den Bodenabdeckbereich (222) eingeschlossen wird, und sich das Klebeband (30) außerhalb des Hohlraums befindet; und

wobei der flüssigkeitsleitende Strömungskanal (223) ein Spalt ist, der an einer Verbindung der jeweiligen Abdeckbereiche gebildet ist.

2. Batterie (100) gemäß Anspruch 1, wobei die Isolierfolie (22) einen Umfangsabdeckbereich (221) umfasst, der Umfangsabdeckbereich (221) die Umfangsfläche des Körperbereichs (211) abdeckt und der Separator (50) einstückig in der Isolierfolie (22) ausgebildet ist und als Bodenabdeckbereich (222) dient, der die untere Endfläche (213) des Körperbereichs (211) abdeckt.

3. Batterie gemäß Anspruch 1 oder 2, wobei der Separator (50) eine Folie aus isolierendem Material ist und so angeordnet ist, dass er parallel zu der unteren Endfläche (213) verläuft, und die Folie aus isolierendem Material eine Dicke von 0,1 mm bis 2 mm aufweist.

4. Batterie gemäß einem der Ansprüche 1 bis 3, wobei mindestens eine Fläche des Separators (50) mit einer vorspringenden Struktur versehen ist.

5. Batterie (100) gemäß einem der Ansprüche 1 bis 4,

wobei der Separator (50) parallel zur Seitenfläche des Bodenabdeckbereichs (222) weg vom Körperbereich (211) vorgesehen ist;

wobei der Separator (50) und der Bodenabdeckbereich (222) eine Gesamtdicke von 0,1 mm bis 2 mm aufweisen.

6. Batterie (100) gemäß Anspruch 5, wobei der Separator (50) und der Bodenabdeckbereich (222) darauf mit entsprechenden Positionierungslöchern zur Positionierung versehen sind; wobei der Separator (50) darauf mit zwei ersten Positionierungslöchern (512) versehen ist, der Bodenabdeckbereich (222) darauf mit zwei zweiten Positionierungslöchern (2222) versehen ist, und sich die zwei ersten Positionierungslöcher (512) jeweils an zwei Enden des Separators (50) befinden und sich auf einer gleichen Mittellinie befinden;

wobei der Separator (50) ferner mit einem narrensicheren Loch (513) versehen ist, das von der Mittellinie des Separators (50) entfernt ist.

7. Batterie (100) gemäß Anspruch 5 oder 6, wobei der Separator (50) mit dem Bodenabdeckbereich (222) durch Heißschmelzen verbunden ist.

8. Batterie (100) gemäß einem der Ansprüche 5 oder 6, wobei der Separator (50) und der Bodenabdeckbereich (222) aus demselben Material durch ein thermoplastisches Verfahren hergestellt sind.

9. Batterie (100) gemäß einem der Ansprüche 4 bis 8, wobei zwischen der Gelee-Rolle (21) und den der Gelee-Rolle (21) zugewandten Flächen des Umfangsabdeckbereichs (221) und des Bodenabdeckbereichs (222) der Isolierfolie (22) eine Klebeschicht nicht vorgesehen ist.

10. Batterie (100) gemäß einem der Ansprüche 1 bis 9, wobei der Separator (50) und die Gelee-Rolle (21) folgende Bedingungen erfüllen:

$$L1 + 3 \text{ mm} \leq L2 \leq L1 + 6 \text{ mm};$$

$$W1 + 3 \text{ mm} \leq W2 \leq W1 + 6 \text{ mm};$$

wobei L1 eine Länge der Gelee-Rolle (21) ist, W1 eine Breite der Gelee-Rolle (21) ist; L2 eine Länge des Separators (50) ist, und W2 eine Breite des Separators (50) ist; wobei der Körperbereich (211) der Gelee-Rolle (21) ungefähr ein quadratischer Block ist, mit L1 in einer Längenrichtung davon, W1 in einer Breitenrichtung davon und H1 in einer Höhenrichtung davon, wobei die Gelee-Rolle (21) als Ganzes ungefähr eine quaderförmige Struktur mit einer Länge x Breite x Höhe von $L1 \times W1 \times H1$

bildet.

**Revendications**

1. Batterie (100) comprenant :

   un boîtier (10) comportant une cavité de logement munie d'une ouverture ;
   un ensemble central (20) pourvu dans la cavité de logement et comprenant un rouleau de gel (21) et une feuille isolante (22) qui recouvre le rouleau de gel (21), dans laquelle le rouleau de gel (21) comprend une portion de corps (211), et la portion de corps (211) comprend une face d'extrémité supérieure (212) et une face d'extrémité inférieure (213) situées respectivement aux deux extrémités de la portion de corps (211), et une face périphérique connectée à la face d'extrémité supérieure (212) et à la face d'extrémité inférieure (213), et la feuille isolante (22) recouvre la face périphérique et la face d'extrémité inférieure (213) ;
   un séparateur (50) pourvu dans le boîtier (10) et qui sépare la face d'extrémité inférieure (213) du rouleau de gel (21) d'une face inférieure (11) du boîtier (10) ; et
   un ensemble de couvercle supérieur (40) qui est connecté au boîtier (10) de manière étanche et ferme l'ouverture du boîtier (10), et un ruban adhésif (30) ;
   dans laquelle l'ensemble de couvercle supérieur (40) est espacé de la feuille isolante (22) ; et
   dans laquelle la feuille isolante (22) comprend une zone de recouvrement circonférentielle (221) qui recouvre la face périphérique de la portion de corps (211), et une zone de recouvrement inférieure (222) qui recouvre la face d'extrémité inférieure (213) de la portion de corps (211), et le séparateur (50) est pourvu sur une face latérale de la zone de recouvrement inférieure (222) éloignée de la portion de corps (211) ; et
   dans laquelle la feuille isolante (22) est pourvue d'un canal d'écoulement de guidage de liquide (223) qui guide partiellement l'électrolyte situé entre le rouleau de gel (21) et la feuille isolante (22) vers un emplacement situé entre la feuille isolante (22) et le boîtier (10) ;
   **caractérisée en ce que**
   un canal d'écoulement d'air est formé entre la feuille isolante (22) et l'ensemble de couvercle supérieur (40) ; et
   l'ensemble de couvercle supérieur (40) comprend une plaque de couvercle supérieur (41) pour fermer l'ouverture du boîtier (10) et un élément inférieur en plastique (42) connecté à une surface inférieure de la plaque de couvercle supérieure (41) faisant face au rouleau de gel (21) ;
   une pluralité de bossages de connexion (421) sont pourvus sur un bord périphérique de l'élément inférieur en plastique (42) et s'étendent vers le rouleau de gel (21), la zone de recouvrement circonférentielle (221) étant connectée à une surface périphérique externe de la pluralité de bossages de connexion (421) ; et
   une surface supérieure (224) de la feuille isolante (22) faisant face à la plaque de couverture supérieure (41) est espacée de la surface inférieure de la plaque de couverture supérieure (41) faisant face au rouleau de gel (21) ; et
   le ruban adhésif (30) est pourvu sur la zone de recouvrement circonférentielle (221) et entre la zone de recouvrement circonférentielle (221) et la zone de recouvrement inférieure (222), de sorte qu'une cavité pour recouvrir le rouleau de gel (21) est formée et enfermée par la zone de recouvrement circonférentielle (221) et la zone de recouvrement inférieure (222), et le ruban adhésif (30) est situé à l'extérieur de la cavité ; et
   le canal d'écoulement de guidage de liquide (223) est un intervalle où une jonction de chaque zone de recouvrement est formée.

2. Batterie (100) selon la revendication 1, dans laquelle la feuille isolante (22) comprend une zone de recouvrement circonférentielle (221), la zone de recouvrement circonférentielle (221) recouvre la face périphérique de la portion de corps (211), et le séparateur (50) est intégralement formé dans la feuille isolante (22) et sert de zone de recouvrement inférieure (222) qui recouvre la face d'extrémité inférieure (213) de la portion de corps (211).

3. Batterie selon la revendication 1 ou 2, dans laquelle le séparateur (50) est une feuille constituée d'un matériau isolant et est agencé pour s'étendre parallèlement à la face d'extrémité inférieure (213), et la feuille constituée d'un matériau isolant présente une épaisseur de 0,1 mm à 2 mm.

4. Batterie selon les revendications 1 à 3, dans laquelle au moins une surface du séparateur (50) est pourvue d'une structure saillante.

5. Batterie (100) selon l'une quelconque des revendications 1 à 4,

   dans laquelle le séparateur (50) est disposé parallèlement à la face latérale de la zone de recouvrement inférieure (222) et espacé de la portion de corps (211) ;
   dans laquelle le séparateur (50) et la zone de recouvrement inférieure (222) présentent une épaisseur totale de 0,1 mm à 2 mm.

**6.** Batterie (100) selon la revendication 5, dans laquelle le séparateur (50) et la zone de recouvrement inférieure (222) sont pourvus de trous de positionnement correspondants pour leur positionnement ; dans laquelle le séparateur (50) est pourvu de deux premiers trous de positionnement (512), la zone de recouvrement inférieure (222) est pourvue de deux deuxièmes trous de positionnement (2222), et les deux premiers trous de positionnement (512) sont situés respectivement à deux extrémités du séparateur (50) et sur une même ligne centrale ; dans laquelle le séparateur (50) est en outre pourvu d'un trou détrompeur (513) qui est éloigné de la ligne centrale du séparateur (50).

**7.** Batterie (100) selon la revendication 5 ou 6, dans laquelle le séparateur (50) est connecté à la zone de recouvrement inférieure (222) par une fusion à chaud.

**8.** Batterie (100) selon l'une quelconque des revendications 5 ou 6, dans laquelle le séparateur (50) et la zone de recouvrement inférieure (222) sont constitués d'un même matériau par un procédé thermoplastique.

**9.** Batterie (100) selon l'une quelconque des revendications 4 à 8, dans laquelle aucune couche d'adhésif n'est pourvue entre le rouleau de gel (21) et les surfaces de la zone de recouvrement circonférentielle (221) et la zone de recouvrement inférieure (222) de la feuille isolante (22) tournée vers le rouleau de gel (21).

**10.** Batterie (100) selon l'une quelconque des revendications 1 à 9, dans laquelle le séparateur (50) et le rouleau de gel (21) répondent aux conditions suivantes :

$$L1 + 3\ mm \leq L2 \leq L1{+}6\ mm\ ;$$

$$W1 + 3\ mm \leq W2 \leq W1 + 6\ mm\ ;$$

où L1 est une longueur du rouleau de gel (21), W1 est une largeur du rouleau de gel (21), L2 est une longueur du séparateur (50) et W2 est une largeur du séparateur (50) ; dans laquelle la portion de corps (211) du rouleau de gel (21) est approximativement un bloc carré, avec L1 dans le sens de sa longueur, W1 dans le sens de sa largeur et H1 dans le sens de sa hauteur, dans laquelle le rouleau de gel (21) dans son ensemble forme une structure approximativement cuboïde avec une longueur $\times$ largeur $\times$ hauteur de L1 $\times$ W1 $\times$ H1.

**Figure 1**

**Figure 2**

213

10

221

H          22

222

21

50          11

**Figure 3**

**Figure 4**

**Figure 5**

100

40

21

30

22

511

514

50

513

51

512

52

10

**Figure 6**

**Figure 7**

**Figure 8**

**Figure 9a**

**Figure 9b**

**Figure 9c**

**Figure 9d**

**Figure 9e**

**Figure 9f**

**Figure 10**

**Figure 11**

**Figure 12**

**Figure 13**

**Figure 14**

**EP 4 160 792 B1**

**Patent documents cited in the description**

- CN 107394063 A
- US 2013209859 A1
- US 2018269523 A1
- EP 3503250 A1
- JP 2019067653 A